Europäisches Patentamt

European Patent Office

Office européen des brevets

(19)

(11) Veröffentlichungsnummer : **0 068 169**
**B1**

(12) # EUROPÄISCHE PATENTSCHRIFT

(45) Veröffentlichungstag der Patentschrift :
28.11.84

(21) Anmeldenummer : 82104864.2

(22) Anmeldetag : 03.06.82

(51) Int. Cl.³ : **B 63 B 27/22**, B 65 G 15/16

(54) Gurtförderanlage für selbstentladende Schiffe.

(30) Priorität : 09.06.81 DE 3122818

(43) Veröffentlichungstag der Anmeldung :
05.01.83 Patentblatt 83/01

(45) Bekanntmachung des Hinweises auf die Patenterteilung : 28.11.84 Patentblatt 84/48

(84) Benannte Vertragsstaaten :
AT BE CH DE FR GB IT LI NL SE

(56) Entgegenhaltungen :
DE-A- 2 519 447
DE-A- 2 627 013
DE-A- 2 717 100
FR-A- 455 814
US-A- 1 776 420
MACHINE DESIGN, Band 43, Nr. 30, 9. Dezember
1971, Seite 18, "New materials-handling ideas will
speed barge unloading"

(73) Patentinhaber : Conrad Scholtz AG
Am Stadtrand 55/59
D-2000 Hamburg 70 (DE)

(72) Erfinder : Paelke, Jürgen
An der Este 13
D-2117 Tostedt (DE)

(74) Vertreter : Lieck, Hans-Peter, Dipl.-Ing.
Lieck & Betten Patentanwälte Maximiliansplatz 10
D-8000 München 2 (DE)

## Beschreibung

Die Erfindung betrifft eine Gurtförderanlage für selbstentladende Schiffe nach dem Oberbegriff des Anspruches 1.

Gurtförderanlagen für Schüttgut zur Entladung von Schiffen werden heute in zunehmendem Maße eingesetzt, um eine saubere und vollständige, vor allem aber schnelle Entleerung der Schiffe zu ermöglichen. Dadurch werden die Liegezeiten der Schiffe verringert und die Kosten gesenkt.

Neben Förderanlagen, die in einem Hafen orstfest installiert sind, werden u. a. Gurtförderanlagen für selbstentladende Schiffe eingesetzt. Eine derartige Gurtförderanlage ist aus der DE-AS 27 17 100 bekannt geworden. Diese Gurtförderanlage für selbstentladende Schiffe weist einen am Schiffsboden in Schiffslängsrichtung verlaufenden Längsförderer auf, über den das auszuladende Schüttgut zum Bug des Schiffes transportiert wird. Hier ist ein Deckbandförderer mit C-förmiger Förderstrecke vorgesehen. Er dient zur Überkopf-Förderung von Schüttgut vom Längsförderer zu einer oberhalb des Laderaumes des Schiffes gelegenen Abgabestelle, von wo aus das Schüttgut über einen Abgabeförderer weiter transportiert wird. Bei dieser Förderanlage geht der am Schiffsboden in Schiffslängsrichtung verlaufende Längsförderer unmittelbar im Bereich des Buges in den C-Förderer über. Es ist also neben dem im Bereich des Buges zur Überkopf-Förderung notwendigen Deckgurt nur ein einziger Tragegurt vorgesehen. Dabei beziehen sich die hier verwendeten Begriffe Tragegurt und Deckgurt auf die Situation vor der C-förmigen Förderstrecke ; danach vertauschen sich die Funktion von Trage- und Deckgurt im Zuge der Förderstrecke, der als Tragegurt dienende Längsförgurt hat vor der Abwurfstelle die Funktion eines Deckgurtes. Mit dieser Gurtförderanlage mit nur einem Längsförderer kann jedoch bei den heute eingesetzten Großraumschiffen eine vollständige und schnelle Entladung nicht sichergestellt werden.

Es sind deshalb auch Gurtförderanlagen für selbstentladende Schiffe bekanntgeworden, bei denen mindestens zwei am Schiffsboden in Schiffslängsrichtung verlaufende Längsförderer vorgesehen sind z. B. DE-A-2 627 013). Diese Längsförderer transportieren das zu entladende Schüttgut in Richtung des Schiffsbug bzw. Schiffshecks zu einer Übergabestelle, von der aus das Schüttgut über einen C-Förderer oder einen Senkrecht- bzw. Steilförderer zu einer Abgabestelle auf dem Schiffsdeck transportiert wird. Die Übergabestelle besteht im wesentlichen aus 2 Schrägen, über die das Schüttgut zu der tiefer gelegenen gemeinsamen Aufgabestelle des C-Förderers rutscht. Diese Übergabestelle erfordert aber einen enormen Bauraum. So müssen zunächst die Querförderer an ihrem Ende nach oben hin ansteigen, um das Schüttgut auf die Schrägen abzuwerfen. Die Schrägen selbst müssen einen genügend großes Gefälle bis hin zur mittleren Aufgabestelle des C-Förderers aufweisen, damit das Schüttgut selbständig weiterrutscht. Die gemeinsame Aufgabestelle selbst des C-Förderers liegt im Bereich seiner unteren Umlenktrommel. Diese Umlenktrommeln weisen aber in der Regel auch einen Durchmesser von ca. 1 m auf. Dies folgt daraus, daß die notwendigen erhöhten Förderkapazitäten des C-Förderers nur mit einem Gurtförderer mit seitlich aufgesetzten Wellenkanten erreicht werden kann. Durch diese 3 Faktoren also, ansteigende Längsförderer, Schrägen und die Umlenktrommel des C-Förderers, ist der enorme Bauraum festgelegt, den diese Übergabestelle erfordert.

Aufgabe der vorliegenden Erfindung ist es, eine Gurtförderanlage für selbstentladende Schiffe mit mindestens zwei am Schiffsboden in Schiffslängsrichtung verlaufenden Längsförderern und mit einem an einem Ende des Schiffes vorgesehenen C-Förderer zu schaffen, die einen möglichst geringen Bauraum beansprucht.

Die Aufgabe wird erfindungsgemäß mit der im Anspruch 1 und bezüglich vorteilhafter Ausgestaltungen in den Unteransprüchen gekennzeichneten Gurtförderanlage gelöst.

Durch die erfindungsgemäße Gurtförderanlage wird der benötigte Bauraum im Schiffskörper erheblich gesenkt und dadurch die Ladekapazität des Schiffes erhöht. Dabei können die in Schiffslängsrichtung angeordneten Längsförderer praktisch bis zu Übergabe an den in Schiffsquerrichtung angeordneten C-Querförderer im Schiffsboden verlaufen, ohne anzusteigen. Durch den C-Querförderer als Übergabeeinrichtung zwischen den Längsförderern und den C-Längsförderer, über den das Schüttgut auf das Schiffsdeck transportiert wird, ist es möglich, die Aufgabestelle des C-Längsförderers oberhalb der Aufgabestellen des C-Querförderers anzuordnen, so daß auch deshalb die Längsförderer an ihrem Ende im Bereich der Übergabeeinrichtung nicht ansteigen müssen.

Als besonders vorteilhaft erweist sich die Ausführungsform nach Anspruch 2, wonach der eine Fördergurt des C-Querförderers eine dreiecksförmige Umlaufstrecke aufweist, der Rücktrumen also nicht über eine Umlenktrommel annähernd parallel zum Fördertrumen zurückgeführt wird. Dadurch ist es möglich, den waagrechten Förderabschnitt zur Aufnahme des Schüttguts von den Längsförderern unmittelbar über der inneren Wandung des Schiffbodens zu führen, wodurch ebenfalls ermöglicht wird, daß die Längsförderer an ihrem Ende im Bereich der Übergabeeinrichtung nicht ansteigen müssen.

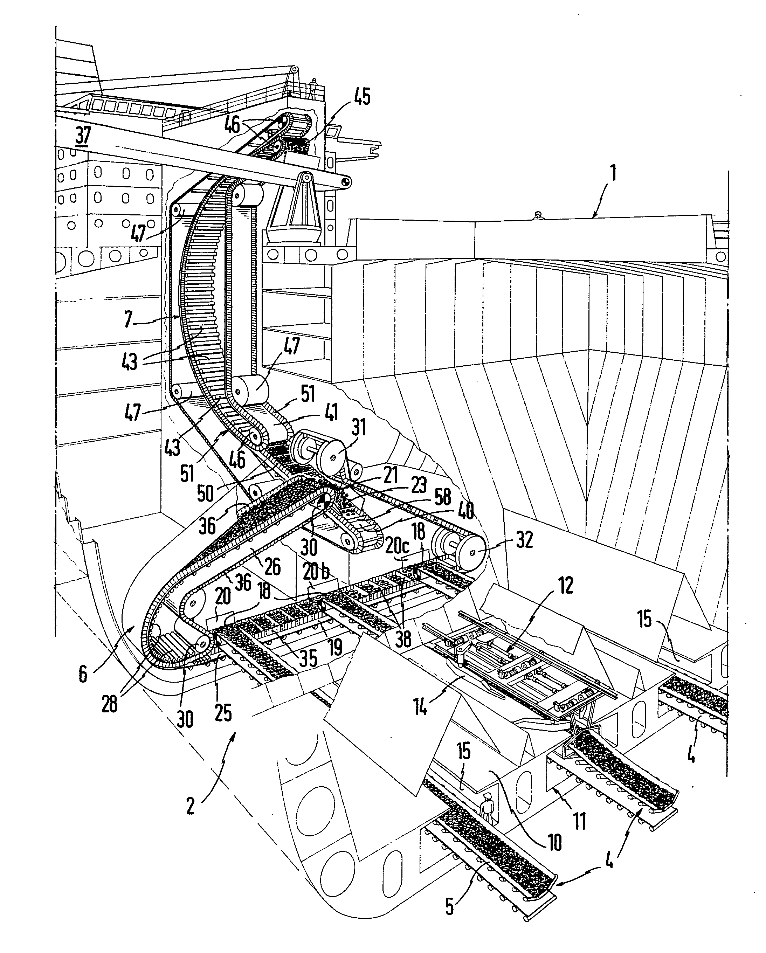

Weitere Ziele, Merkmale und Vorteile der Erfindung ergeben sich aus der folgenden Beschreibung des in der Zeichnung dargestellten Ausführungsbeispiels.

In der Zeichnung ist ein Schnitt durch ein Schiff 1 mit einer dreidimensionalen Ansicht einer Gurtförderanlage 2 gezeigt. Die Gurtförderanlage 2 umfaßt mehrere, im gezeigten Ausführungsbeispiel drei in Schifflängsrichtung angeordnete Längsförderer 4, einen in Schiffquerrichtung angeordneten C-Querförderer 6 und einen weiteren in Schifflängsrichtung angeordneten C-Längsförderer 7.

Die Längsförderer 4 sind noch unterhalb einer inneren Wandung 10 eines Schiffbodens 11 angeordnet. Oberhalb eines jeden Längsförderers 4 ist parallel zu diesen jeweils ein Räumungsschlitz 15 in der inneren Wandung 10 vorgesehen. Jedem Längsförderer 4 ist ein Räumpflug 12 zugeordnet, der entlang eines jeden Längsförderers 4 oberhalb des Schiffbodens 11 bewegt wird und über steuerbare Räumzangen 14 das zu entleerende Schüttgut über den jeweiligen Räumgsschlitz 15 auf die Längsförderer 4 auflädt. Die Längsförderer 4 weisen Fördergurte 5 auf, die im obenliegenden Fördertrum gemuldet sind.

An den Enden 18 der Längsförderer 4 ist der in Schiffquerrichtung angeordnete C-Querförderer 6 mit einem waagrechten Förderabschnitt 19 ausgebildet. Der waagrechte Förderabschnitt 19 dient gleichzeitig als Aufgabestelle 20a, 20b und 20c für das von den drei Längsförderern 4 antransportierte, zu entleerende Schüttgut.

Der C-Querförderer 6 stellt einen Deckbandförderer mit C-förmiger Förderstrecke dar. Er dient zur Überkopf-Förderung von Schüttgut von den Aufgabestellen 20a, 20b und 20c zu einer oberhalb dieser Aufgabestellen gelegenen Abgabestelle 21, die gleichzeitig eine Aufgabestelle 23 des nachfolgenden C-Längsförderers 7 darstellt. Die Förderung wird mittels zweier Fördergurte 25 und 26 bewirkt, die mit gleicher Geschwindigkeit laufen. An den Aufgabestellen 20a bis 20c bildet der dort untere Fördergurt 25 den Tragegurt, auf den der andere Fördergurt 26 als Deckgurt hinter diesen Aufgabestellen aufgelegt wird. Die derart mit ihren Vorwärtstrumen vereinigten beiden Fördergurte laufen längs der durch Stütztrommel 28 definierten, gekrümmten Förderstrecke parallel zueinander. Nach dem Ende der gekrümmten Förderstrecke werden sie voneinander abgehoben. Im Zuge der Förderstrecke am senkrechten Abschnitt derselben vertauschen sich die Funktionen der beiden Fördergurte 25 und 26 ; oberhalb des senkrechten Abschnitts ist der Fördergurt 26 der Tragegurt und der Fördergurt 25 der Deckgurt. Während der Fördergurt 26 über Endtrommeln 30 umläuft und zurückgeführt wird, weist der Fördergurt 25 des C-Querförderers 6 eine dreiecksförmige Umlaufstrecke auf, die durch die Stütztrommeln 28, eine oberhalb der Abgabestelle 21 angeordneten Umlenktrommel 31 und einer weiteren Umlenktrommel 32 definiert ist, die auf der den Stütztrommeln 28 gegenüberliegenden Seite des Schiffes 1 angeordnet ist. Der waagrechte Förderabschnitt 19 zwischen der Umlenktrommel 32 und den Stütztrommeln 28 kann somit unmittelbar über der inneren Wandung 10 des Schiffbodens 11 geführt werden.

Die Fördergurte 25 und 26 sind jeweils mit zwei seitlichen Wellenkanten 35 bzw. 36 in üblicher Ausbildung versehen, wobei die Wellenkanten 36 des Fördergurtes 26 einen größeren Querabstand als die Wellenkanten 35 haben, so daß sie sich im vereinigten Zustand beider Fördergurte außen neben den Wellenkanten 25 befinden und mit ihrem Kopf den Fördergurt 25 an seitlichen, über dessen Wellenkanten 25 überstehenden Randbereichen berühren. Zur besseren Mitnahme des Schüttgutes ist der Fördergurt 25 außerdem in regelmässigen Längsabständen von z. B. 1 000 mm mit quer ausgerichteten, im Querschnitt geraden Mitnehmerprofilen 38 gleicher Höhe wie die Wellenkanten 35 besetzt.

Von der Abgabestelle 21 des C-Förderers 6 gelangt das zu entladende Schüttgut unmittelbar zur nachfolgenden Aufgabestelle 23 des C-Längsförderers 7 und mittels diesem auf das Schiffdeck und wird von dort über einen Abgabegurt 37 weiter transportiert.

Der C-Längsförderer 7 stellt ebenfalls einen Deckbandförderer zur Überkopf-Förderung von Schüttgut dar, der zwei Fördergurte 40 und 41 umfaßt. Hinter der Aufgabestelle 23 wird der Fördergurt 41 auf den Fördergurt 40 aufgelegt, so daß die mit ihren Vorwärtstrumen vereinigten beiden Fördergurte längs der gekrümmten und durch die Stütztrommeln 43 definierten Förderstrecke parallel zueinander bis zur Abwurfstelle 45 oberhalb des Schiffdeckes verlaufen, wo sie wieder voneinander getrennt werden. Die Fördergurte 40 und 41 laufen dabei jeweils mit ihrem Vordertrumen über Endtrommeln 46 und mit ihrem Rückwärtstrumen über Umlenktrommeln 47.

In gleicher Weise wie die Fördergurte 25 und 26 sind auch die Fördergurte 40 und 41 jeweils mit zwei seitlichen Wellenkanten 50 bzw. 51 in üblicher Ausbildung sowie der Fördergurt 40 mit Mitnehmerprofilen 58 versehen.

In dem gezeigten Ausführungsbeispiel ist der C-Längsförderer 7 bezüglich eines Querschnitts durch das Schiff in der Schiffsmitte angeordnet.

**Ansprüche**

1. Gurtförderanlage für selbstentladende Schiffe mit mindestens zwei im Bereich des Schiffbodens in Schifflängsrichtung verlaufenden Längsförderern (4), denen jeweils ein Räumpflug (14) zugeordnet ist, und mit einem an einem Ende des Schiffes vorgesehenen C-Längsförderer (7) und einer Übergabeeinrichtung zwischen den Enden der Längsförderer und der Aufgabestelle (20) des C-Längsförderers, dadurch gekennzeichnet, daß die Übergabeeinrichtung aus einem C-Querförderer (6) besteht, der im Bereich der Enden (18) der Längsförderer (4) einen waagrechten Förderabschnitt (19) aufweist.

2. Gurtförderanlage nach Anspruch 1, dadurch gekennzeichnet, daß ein Fördergurt (25) des C-Querförderers (6) eine dreiecks-förmige Umlaufstrecke aufweist, die durch den waagrechten Förderabschnitt (19) und eine obere Umlenktrommel (31) im Bereich der Abgabestelle (21) des C-Querförderers (6) festgelegt ist.

3. Gurtförderanlage nach Anspruch 1 oder 2, dadurch gekennzeichnet, daß der C-Längsförderer (7) bezüglich eines Querschnitts durch das Schiff (1) in der Schiffsmitte angeordnet ist.

4. Gurtförderanlage nach Anspruch 1, 2 oder 3, dadurch gekennzeichnet, daß die Längsförderer (4) unterhalb einer inneren Wandung (10) im Schiffboden (11) angeordnet sind.

5. Gurtförderanlage nach einem der Ansprüche 1 bis 4, dadurch gekennzeichnet, daß die Fördergurte (25 ; 26) des C-Querförderers (6) jeweils mit zwei seitlichen Wellenkanten (35 ; 36) versehen sind.

6. Gurtförderanlage nach einem der Ansprüche 1 bis 5, dadurch gekennzeichnet, daß die Fördergurte (40 ; 41) des C-Längsförderers (7) jeweils mit zwei seitlichen Wellenkanten (50 ; 51) versehen sind.

7. Gurtförderanlage nach Anspruch 5 oder 6, dadurch gekennzeichnet, daß der an der Aufgabestelle den Traggurt bildende Fördergurt (25 bzw. 40) des C-Querförderes (6) und/oder des C-Längsförderers (7) jeweils mit im Querschnitt geraden Mitnehmerprofilen (38 bzw. 58) gesetzt ist.

8. Gurtförderanlage nach einem der Ansprüche 1 bis 7, dadurch gekennzeichnet, daß die Längsförderer (4) gemuldete Fördergurte (5) aufweisen.

## Claims

1. Belt conveyor plant for self-discharging ships, comprising at least two longitudinal conveyors (4) in the region of the ship's bottom each of which has allocated to it a clearing « plough » (14), and with a longitudinal C conveyor (7) provided at one end of the ship, and a transfer system between the extremities of the longitudinal conveyors and the loading point (20) of the longitudinal C conveyor, characterised in that the transfer system comprises a transverse C conveyor (6) which has a horizontal conveying section (19) in the area of the extremities (18) of the longitudinal conveyors (4).

2. Belt conveyor plant according to claim 1, characterised in that a conveyor belt (25) of the transverse C conveyor (6) has a triangularly formed circulating section established by means of the horizontal conveying section (19) and of an upper deflecting drum (31) in the area of the discharge point (21) of the transverse C conveyor (6).

3. Belt conveyor plant according to claim 1 or 2, characterised in that the longitudinal C conveyor (7) is situated at the middle of the ship, relative to a cross-section through the ship (1).

4. Belt conveyor plant according to claim 1, 2 or 3, characterised in that the longitudinal conveyors (4) are situated beneath an internal floor (10) in the bottom (11) of the ship.

5. Belt conveyor plant according to one of the claims 1 to 4, characterised in that the conveyor belts (25 ; 26) of the transverse C conveyor (6) are in each case equipped with two lateral corrugated edges (35 ; 36).

6. Belt conveyor plant according to one of the claims 1 to 5, characterised in that the conveyor belts (40 ; 41) of the longitudinal C conveyor (7) are in each case equipped with two lateral corrugated edges (50 ; 51).

7. Belt conveyor plant according to claim 5 or 6, characterised in that the conveyor belt (25, 40 resp.) — forming the carrying belt at the loading point — of the transverse C conveyor (6) and/or of the longitudinal C conveyor (7) is in each case occupied by entraining sections (38 ; 58 resp.) which are straight in cross-section.

8. Belt conveyor plant according to one of the claims 1 to 7, characterised in that the longitudinal conveyors (4) comprise trough-shaped conveyor belts (5).

## Revendications

1. Installation de transporteur à courroies pour navires auto-déchargeurs, avec au moins deux convoyeurs longitudinaux (4) s'étendant dans le sens longitudinal du navire dans la zone de la cale de ce dernier, à chacun desquels est associé un chariot racleur (14), et avec un convoyeur longitudinal en C (7) prévu à une extrémité du navire et un équipement de transfert entre les extrémités du convoyeur longitudinal et le point de chargement (20) du convoyeur longitudinal en C, caractérisée en ce que l'équipement de transfert est constitué d'un convoyeur transversal en C (6), lequel, dans la zone des extrémités (18) du convoyeur longitudinal (4), présente un tronçon de transport horizontal (19).

2. Installation de transporteur à courroies selon la revendication 1, caractérisée en ce qu'une courroie transporteuse (25) du convoyeur transversal en C (6) présente une trajectoire triangulaire, laquelle est définie par le tronçon de transport horizontal (19) et un rouleau de déviation supérieur (31) dans la zone du point de déchargement (21) du convoyeur transversal en C (6).

3. Installation de transporteur à courroies selon l'une quelconque des revendications 1 ou 2, caractérisée en ce que le convoyeur longitudinal en C (7) est, par rapport à une section transversale du navire (1), disposé au milieu du navire.

4. Installation de transporteur à courroies selon l'une quelconque des revendications 1 à 3, caractérisée en ce que les convoyeurs longitudinaux (4) sont disposés en dessous d'une paroi intérieure (10) dans la cale de navire (11).

5. Installation de transporteur à courroies selon l'une quelconque des revendications 1 à 4, caractérisée en ce que les courroies transporteuses (25 ; 26) du convoyeur transversal en C (6) sont chacune pourvues de deux ridelles ondulées latérales (35 ; 36).

6. Installation de transporteur à courroies selon l'une quelconque des revendications 1 à 5, caractérisée en ce que les bandes transporteuses (40 ; 41) du convoyeur longitudinal en C (7) sont chacune pourvues de deux ridelles ondulées latérales (50 ; 51).

7. Installation de transporteur à courroies selon l'une quelconque des revendications 5 ou 6, caractérisée en ce que la bande transporteuse (respectivement 25 et 40), formant la bande portante au point de déchargement, du convoyeur transversal en C (6) et/ou du convoyeur longitudinal en C (7) est, dans les deux cas, équipée de profilés d'entraînement (respectivement 38 et 58) de section droite.

8. Installation de transporteur à courroies selon l'une quelconque des revendications 1 à 7, caractérisée en ce que les convoyeurs longitudinaux (4) présentent des bandes transporteuses (5) ayant la forme d'une auge.